# EUROPÄISCHE PATENTANMELDUNG

(11) **EP 2 645 336 A1**
(43) Veröffentlichungstag der Anmeldung: **02.10.2013**
(21) Anmeldenummer: 12161550.4
(22) Anmeldetag: 27.03.2012
(51) Int. Cl.: G07B 15/02, G07F 17/00, G07B 15/06, G06Q 20/32, G08G 1/14, E04H 6/42, G06Q 10/02, G06Q 30/02

(54) **Verfahren zur automatisierten Vermittlung von Parkflächen**

(71) Anmelder: Scheidt & Bachmann GmbH, 41238 Mönchengladbach (DE)
(72) Erfinder: Miller, Norbert, 41063 Mönchengladbach (DE); Kammler, Martin, 41063 Mönchengladbach (DE)
(74) Vertreter: Stenger, Watzke & Ring

(57) **Zusammenfassung**

Um ein Verfahren bereitzustellen, das einen Marktplatz für Kunden, Parkraumbewirtschafter und Einrichtungen mit Publikumsverkehr wie Einzelhändler, Dienstleister, Praxen, Behörden und dergleichen bietet und das es den Einrichtungen unter Umständen auch ermöglicht, unter bestimmten Bedingungen ihren Kunden einen Rabatt auf den Parkvorgang anzubieten, wird mit der Erfindung ein Verfahren zur automatisierten Vermittlung von Parkflächen vorgeschlagen, wobei zur Nutzung bereitgestellte Parkflächen in der Datenbank des Zentralrechners unter Angabe von zumindest Ort, Verfügbarkeit und Nutzungsbedingungen erfasst und zum Zwecke der automatischen Verwaltung und durch Anfrage angeforderte Publikation über ein rechnerbasiertes Netzwerk bereitgestellt werden, einem eine Suchanfrage startenden Kunden in Frage kommende Parkflächen zur Auswahl vorgeschlagen werden und dem Kunden bei Buchung einer Parkfläche ein automatisch erstellter Berechtigungs-Identifkationscode übermittelt wird.

## Beschreibung

Die vorliegende Erfindung betrifft ein Verfahren zur automatisierten Vermittlung von Parkflächen.

Die vorhandene Infrastruktur besteht aus öffentlichen Parkplätzen entlang der Straßen sowie kommerziellen Parkflächen in Form von Parkplätzen, Parkhäusern und dergleichen.

Autofahrer, die eine Einrichtung wie zum Beispiel einen Einzelhändler, einen Dienstleister, eine Klinik, eine Behörde oder dergleichen aufsuchen wollen, suchen üblicherweise vor Ort nach einem geeigneten Parkplatz. Insbesondere haben sie dabei zum Zeitpunkt der Suche keinerlei Überblick über die Kosten, etwaige Rabattkonditionen und die unterschiedlichen Auswahlmöglichkeiten. Dies kostet häufig sehr viel Zeit, führt oft nicht zum günstigsten verfügbaren Parkplatz oder nicht zum bestgelegenen.

Parkplätze, Parkhäuser und vergleichbare Parkflächen werden in der Regel von Laufkundschaft oder Ortskundigen genutzt und haben kaum eine Möglichkeit, auslastungsabhängige Preisstrukturen anzubieten, so dass sich kein echter Wettbewerb ergibt, sondern die Kunden nach Zufall, Lage oder Kosten Parkhäuser nutzen, was in den letztgenannten Fällen Kenntnis voraussetzt.

Häufig können Einrichtungen mit Publikumsverkehr, wie z. B. Einzelhändler, Dienstleister, Praxen, Behörden und dergleichen, keine eigenen Parkflächen für die Besucher anbieten, wodurch bisher nur begrenzte geschäftliche Verknüpfungsmöglichkeiten zwischen der Nutzung der Einrichtung und der Parkraumbewirtschaftung gegeben sind.

Bekannt ist ein Rabattierverfahren auf Basis von Parkscheinen: Bei Erfüllung einer Rabattbedingung legt der Kunde der Einrichtung den Parkschein vor, und die Einrichtung gewährt einen Rabatt auf den Parkvorgang, indem der Parkschein mit einer Rabattmarkierung versehen wird. Dies geschieht häufig, indem mit einem mechanischen Rabattierer ein Loch an definierter Stelle in den Parkschein gestanzt wird. Das Loch wird vom Bezahlautomaten eines Parkhauses oder Parkplatzes als Rabattberechtigung erkannt.

Dabei hat der Rabattierer ein mechanisches Zählwerk, so dass die Anzahl gewährter Rabatte (aus den Zählwerken der Rabattierer) und die Anzahl der in Anspruch genommenen Rabatte (aus den Abrechnungen des Parkhauses oder -platzes) abgeglichen werden können und zwischen der Rabatt gewährenden Einrichtung und dem Parkraumbewirtschafter eine Verrechnung durchgeführt werden kann. Dieses größtenteils manuelle Verfahren hat erhebliche Nachteile unter verschiedenen Aspekten:
- Die ausgestanzte Rabattmarkierung ist naturgemäß auf dem Parkschein sichtbar, was den Kunden potenziell zum Betrug verleiten kann, indem er selber eine Rabattmarkierung ausschneidet, ohne die Rabattbedingung erfüllt zu haben.
- Der Parkraumbewirtschafter kann Verträge zur Rabattierung nur mit einer oder wenigen Einrichtungen abschließen, limitiert dadurch, dass nur eine eingeschränkte Anzahl technisch unterscheidbarer Rabattmarkierungen auf dem Parkschein angebracht werden kann.
- Der manuelle Abgleich und die Abrechnung zwischen gewährten und in Anspruch genommenen Rabatten ist schwierig: es müssen für den Abrechnungszeitraum die Zählerstandsdifferenzen von möglicherweise mehreren mechanischen Rabattieren (bei der Einrichtung) mit den im gleichen Zeitraum beanspruchten Rabatten (beim Parkhaus oder Parkplatzbetreiber) abgeglichen werden. Abgleichsdifferenzen sind häufig undmüssen je nach Höhe entweder toleriert oder aufwendig recherchiert werden.

Weitere Systeme mit einer wirtschaftlichen Verknüpfungsmöglichkeit zwischen der Nutzung der Einrichtung und der Parkraumbewirtschaftung sind nicht bekannt und das beschriebene System ist vergleichsweise umständlich und aufwendig.

Ausgehend vom vorbeschriebenen Stand der Technik ist es die **Aufgabe** der vorliegenden Erfindung, ein Verfahren bereitzustellen, das die vorgenannten Probleme überwindet und einen Marktplatz für Kunden, Parkraumbewirtschafter und Einrichtungen mit Publikumsverkehr wie Einzelhändler, Dienstleister, Praxen, Behörden und dergleichen bietet.

Zur technischen **Lösung** dieser Aufgabe wird ein Verfahren mit den Merkmalen des Patentanspruches 1 vorgeschlagen. Weitere Vorteile und Merkmale ergeben sich aus den Unteransprüchen.

Die Erfindung offenbart ein automatisierbares Verfahren, das rechnergestützt die Möglichkeit bietet, dass Kunden über ein netzwerkfähiges Gerät Parkflächen bei einem Parkraumbewirtschafter suchen, auswählen und buchen können. Somit wird der jeweilige Besuch für den Kunden planbar. Darüber hinaus können die Parkhausbetreiber beziehungsweise Parkplatzbetreiber ihre Kontingente planen. Weiterhin ergeben sich durch erfindungsgemäße Verfahren neue geschäftliche Möglichkeiten, indem beispielsweise Einrichtungen wie Einzelhändler, Dienstleister, Praxen und dergleichen Parkflächenkontingente vorbuchen und ihren Kunden direkt anbieten können. Darüber hinaus ergeben sich Möglichkeiten für die Einrichtungen mit Publikumsverkehr, den Parkvorgang für den Kunden zu rabattieren. Die Einrichtung mit Publikumsverkehr wird die Rabatte an Bedingungen knüpfen wie beispielsweise Mindestumsatz, Umsatzhäufigkeit, Aufenthaltsdauer bei der Einrichtung und dergleichen. Die spätere Verrechnung der genutzten Rabatte zwischen der Einrichtung und dem Parkraumbewirtschafter erfolgt rechnergestützt über einen automatisierten Abrechnungsprozess und kann in Abrechnungen bis zum einzelnen Rabattiervorgang detailliert werden.

Gemäß einem vorteilhaften Vorschlag der Erfindung kann das Verfahren auf einem mobilen Netzwerk betrieben werden, so dass der Kunde die Parkplatzsuche und die Parkplatzbuchung über ein mobiles Endgerät, beispielsweise ein Smartphone oder dergleichen, abwickeln kann.

In vorteilhafter Weise kann der Kunde nach eigenen Wünschen Parkflächen auswählen und dazu von der Erfindung angebotene Kriterien heranziehen. Dies können beispielsweise Kriterien sein wie Kosten, Rabattierung und Entfernung/Verbindung zu der zu besuchenden Einrichtung. Zum Beispiel kann der Kunde ein Parkfläche in der Nähe seines Standorts suchen und bekommt vom erfindungsgemäßen System verfügbare Parkflächen mit Nutzungsbedingungen genannt; sinngemäß zum Beispiel "Parkhaus Kaiserstraße bietet 10% Rabatt, wenn Sie bei C&A einkaufen".

In vorteilhafter Weise erhält der Kunde nach Auswahl einer Parkfläche einen Berechtigungsidentifikationscode (nachfolgende kurz "ID" genannt) elektronisch zugesendet, wobei es dem Kunden offensteht, ob er die ID über ein stationäres Gerät empfängt und ausdruckt oder die die ID enthaltende elektronische Mitteilung auf einem mobilen Endgerät speichert. Die ID wird auch dem ausgewählten Parkhaus oder Parkplatz mitgeteilt; sie ermöglicht dem Kunden dabei den Zugang und identifiziert ihn als potentiell rabattberechtigt für diesen Parkvorgang bei der Einrichtung. In vorteilhafter Weise ist die ID maschinenlesbar ausgeführt und kann beispielsweise ein ein- oder zweidimensionaler Strichcode sein.

Die ID kann beispielsweise ein sogenannter QR-Code sein, den der Kunde lediglich an einem entsprechenden Leser vorzeigt, damit ihm Einfahrt in das Parkhaus oder auf den Parkplatz gewährt wird. Wenn es die Parkhaus- oder Parkplatzinfrastruktur erfordert, kann der Kunde die ID verwenden, um ein physisches Ticket auszudrucken.

Das Verfahren bietet wie bereits erwähnt die Möglichkeit, dass sich Kunden registrieren und damit identifizierbar werden. Insbesondere können auch Kontoinformationen verwendet werden, um entsprechende Bezahlvorgänge automatisiert abzuwickeln.

Rabattbedingungen der Einrichtungen mit Publikumsverkehr werden vorteilhafterweise in der Datenbank des erfindungsgemäßen Systems verwaltet. Die Gesamtheit der Parktarife mit verfügbaren Rabatten und zugehörigen Rabattbedingungen stellt dabei die Nutzungsbedingungen für eine Parkfläche dar. Für jede Parkfläche ist dabei zu jeder Zeit genau ein Satz in sich geschlossener Nutzungsbedingungen gültig, der mit der Erfindung automatisch verwaltet und zur Abfrage durch den Kunden bereit gestellt werden kann.

Mit der Erfindung wird ein automatisiertes Verfahren beziehungsweise ein System bereitgestellt, das unter Nutzung herkömmlicher Netzwerktechnologie, Datenbanktechnologie und entsprechender Computersysteme einschließlich der Endgeräte die Möglichkeit bietet, Parkplätze anzubieten, Parkplätze auszuwählen, Parkplätze zu buchen und gegebenenfalls die gesamte Bezahlung einschließlich der Berücksichtigung von Rabattierungen abzuwickeln.

Weitere Vorteile und Merkmale der Erfindung ergeben sich aus der folgenden Beschreibung anhand der Figuren. Dabei zeigen:
- Fig. 1: eine flussdiagrammartige Darstellung eines Ausführungsbeispiels für ein erfindungsgemäßes System;
- Fig. 2: eine flussdiagrammartige Darstellung zur Erläuterung eines Ausführungsbeispiels zur Erstellung einer Datenbank;
- Fig. 3: eine flussdiagrammartige Darstellung des System gemäß Fig. 1 im Anfragezustand;
- Fig. 4: eine flussdiagrammartige Darstellung des System gemäß Fig. 1 im Auswahlzustand;
- Fig. 5: eine flussdiagrammartige Darstellung der Abläufe bei Beginn der Parkflächennutzung;
- Fig. 6: eine flussdiagrammartige Darstellung im Zusammenhang mit dem Zahlvorgang;
- Fig. 7: eine flussdiagrammartige Darstellung bei Verlassen der Parkfläche und
- Fig. 8: eine flussdiagrammartige Darstellung im Zusammenhang mit der Abrechnung.

In den Figuren sind gleiche Elemente mit gleichen Bezugszeichen versehen.

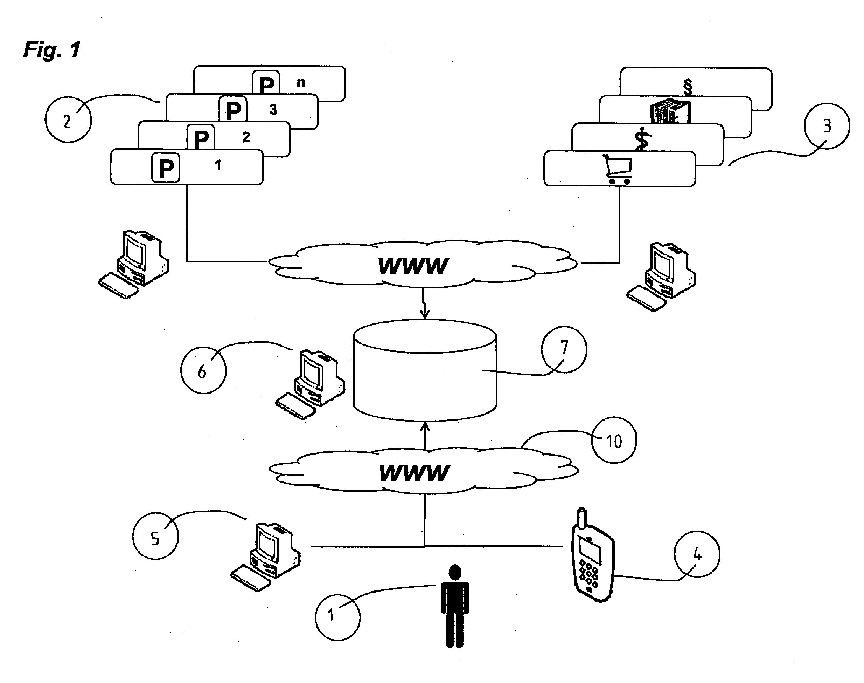

Fig. 1 zeigt ein Ausführungsbeispiel für das erfindungsgemäße System, das eine Geschäftsbeziehung zwischen Parkraumbewirtschaftern 2 Einrichtungen mit Publikumsverkehr 3 und Kunden 1 auf Basis eines Zentralrechners 6 mit Datenbank 7 unterstützt.

Ein Zentralrechner 6 basiertes System betreibt eine Datenbank 7. Im gezeigten Ausführungsbeispiel können sich Parkraumbewirtschafter 2, die Parkflächen der unterschiedlichsten Art zur Verfügung stellen können, beispielsweise über das Internet mit dem Zentralrechner 6 verbinden und ihre Parkflächen einpflegen.

Weiterhin können Einrichtungen mit Publikumsverkehr 3, also Behörden, Geschäfte und so weiter, ebenfalls über das Internet ihre Informationen in den Zentralrechner einpflegen. Unter Verwendung von mobilen Endgeräten 4 oder auch stationären Endgeräten 5 kann ein Kunde 1 nun über das Internet 10 Kontakt zum Zentralrechner 6 aufnehmen. Er kann dann einen Ort, eine Einrichtung mit Publikumsverkehr oder dergleichen angeben und sich Parkflächen mit unterschiedlichen Nutzungsbedingungen anbieten lassen. Er kann diese dann auswählen.

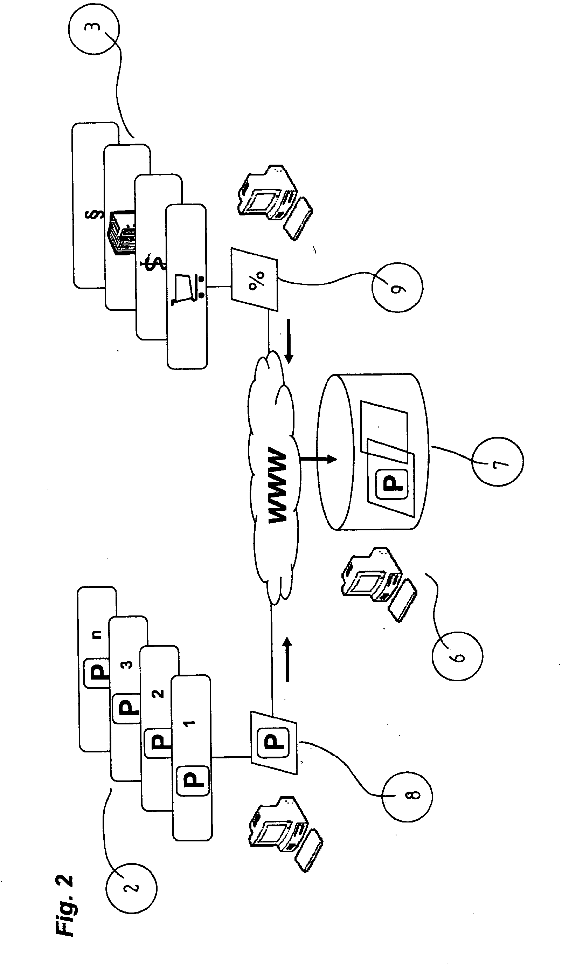

Die Fig. 2 zeigt das Einpflegen 8 von Daten durch die Parkraumbewirtschafter 2 und das Vorbuchen von Kontingenten sowie das Definieren von Rabatten und Rabattbedingungen 9 durch die Einrichtungen mit Publikumsverkehr 3. Je nach Aufbau der Datenbank 7 können Parkraumbewirtschafter 2 Orte, auch Eignungen für unterschiedliche Fahrzeuge, Tarife, Kontingente und dergleichen einpflegen. Die Einrichtungen mit Publikumsverkehr 3 können Vorreservierungen, Vorbuchungen, Rabattbedingungen, Zeiten und dergleichen 9 einpflegen. Auf diese Weise wird die Datenbank 7 aktualisiert.

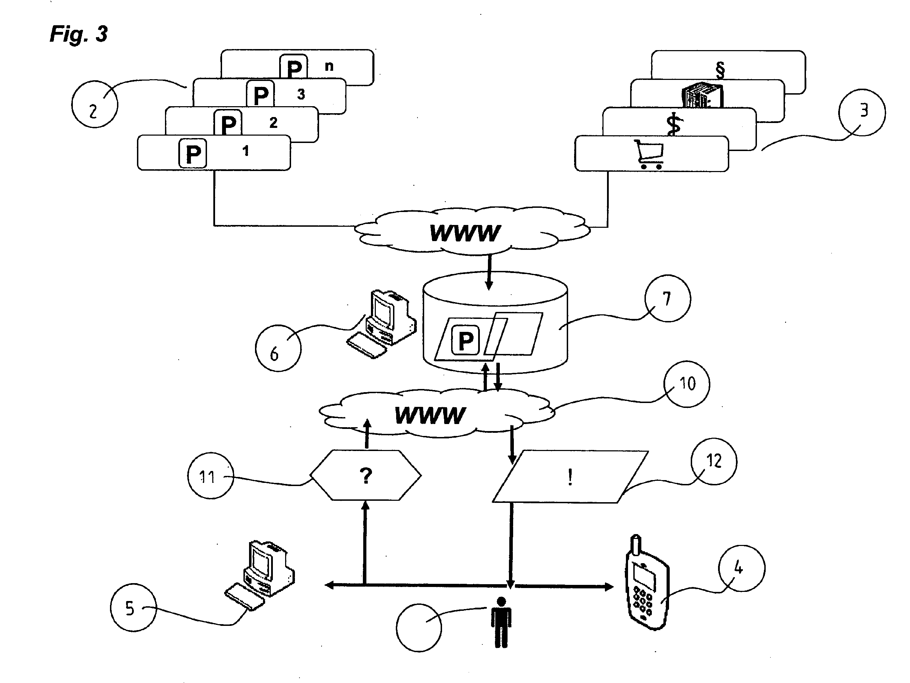

Fig. 3 zeigt die Anfrage 11 eines Kunden 1 an das System nach einer Parkfläche zu bestimmten Kriterien und Antwort 12 des Systems mit einer Liste von verfügbaren Parkflächen sowie deren Nutzungsbedingungen. Unter Nutzung des beschriebenen Systems kann also ein Kunde 1 über ein mobiles Endgerät 4 oder ein stationäres Endgerät 5 eine Anfrage 11 starten. Er kann beispielsweise die verfügbaren Plätze zum Zeitpunkt X in der Nähe von Geschäft Y abfragen. Als Antwort erhält er eine Auswahlliste mit Parkplätzen, Parkhäusern, Lage zum Geschäft, beispielsweise Entfernungsangaben, sowie Nutzungsbedingungen wie Preise, Rabatte und dergleichen. Dies wird über das Internet 10 vom Zentralrechner 6 an den Kunden gesandt.

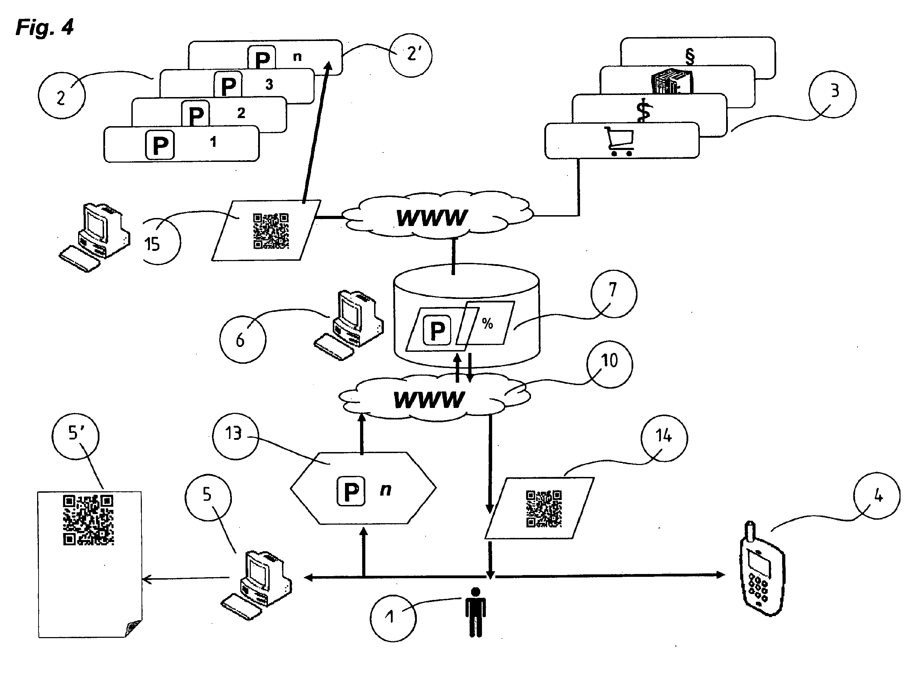

Fig. 4 zeigt die Auswahl 13 einer Parkfläche durch den Kunden und die Systemanhnrorten darauf an 14 den Kunden 1 und an 15 das gewählte Parkhaus 2'. Nachdem sich der Kunde den gewünschten Parkplatz ausgewählt hat, erhält er vom Zentralrechner 6 einen Berechtigungs-ID-Code 14. Diesen kann er entweder über das stationäre Endgerät 5 ausdrucken und sich so einen ID-Cvde-Träger 5' erzeugen, oder er hat ihn auf seinem mobilen Endgerät 4. Darüber hinaus wird in der Datenbank die Verfügung über die Parkfläche registriert. Optional kann auch dem Parkraumbewirtschafter eine Reservierung 15 mit dem Code übersandt werden. Dieser kann dann die Parkfläche 2' entsprechend reservieren.

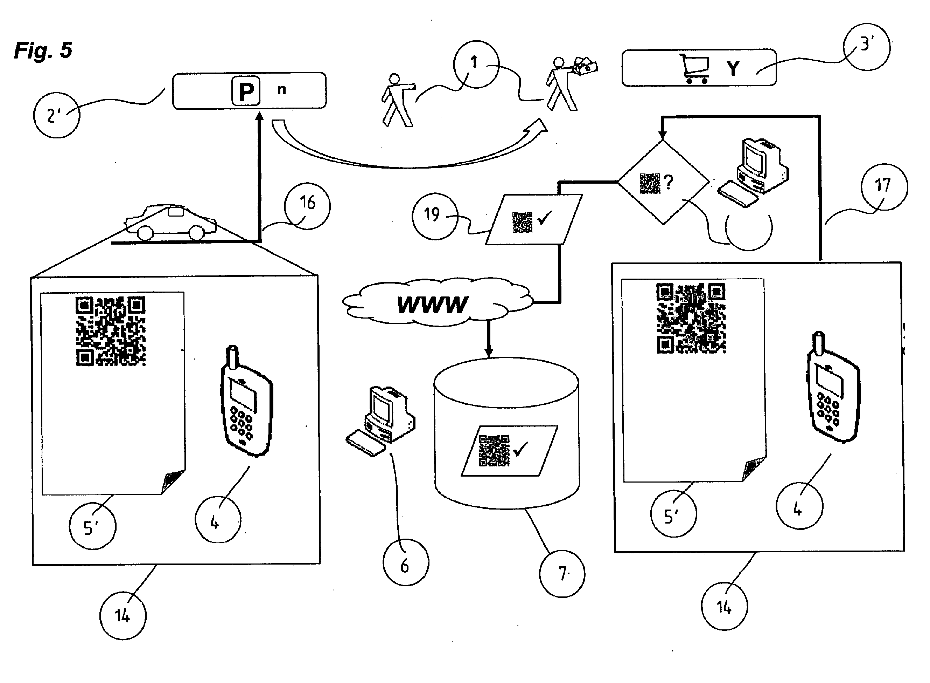

Fig. 5 zeigt die Einfahrt 16 des Kunden 1 mit dem zuvor erhaltenen ID-Code 14 in das Parkhaus 2' und - über denselben ID-Code 14 - die Identifikation 17 des Kunden 1 bei der besuchten Einrichtung 3' und die Prüfung 18 der Rabattbedingungen zur Erlangung des Rabatts. Der gewährte Rabatt wird in der Datenbank 7 des Systems hinterlegt 19.

Nachdem also der Kunde 1 sein Parkplatz 2' eingenommen hat, bewegt er sich beispielsweise und unter anderem zum Geschäft Y 3', wo ein Überprüfung der Rabattbedingungen 18 anhand des Codes 19 erfolgt. Die Datenbank erhält entsprechende Informationen. Die Prüfung kann anhand des Druckträgers 5' oder des Mobilendgeräts 4 erfolgen, die als Identifikation 14 für den Rabatt vom Kunden vorgelegt werden. Unter Rabatt im Sinne der vorliegenden Beschreibung gelten sämtliche geschäftlichen Vorteile, die eine Einrichtung mit Publikumsverkehr 3 einem Kunden 1 einzuräumen bereit ist. Dies kann ein Sponsoring sein oder die Einräumung besonderer Kaufbedingungen und dergleichen.

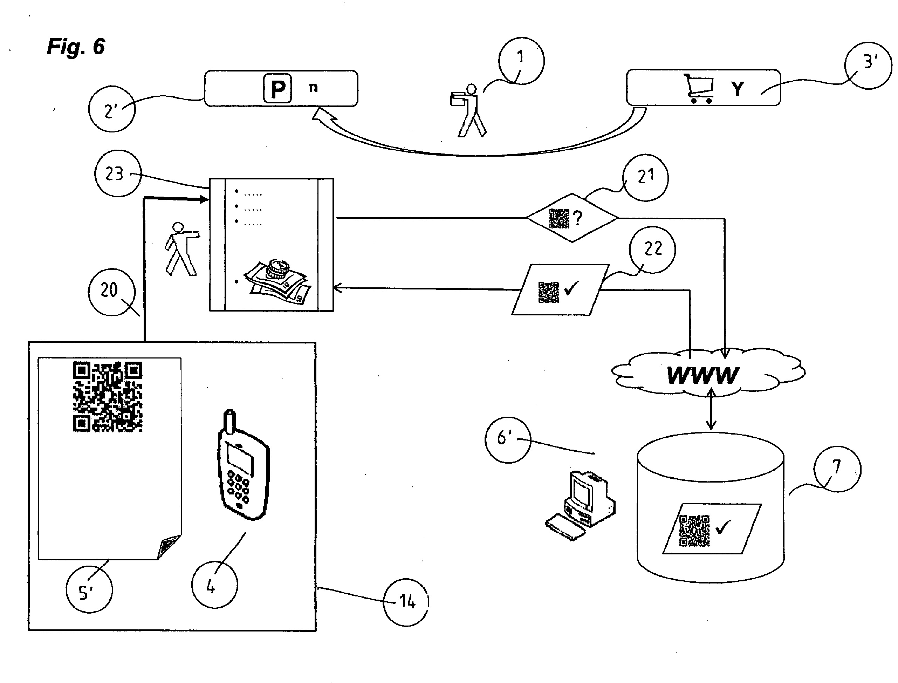

Fig. 6 zeigt den Zahlvorgang im Parkhaus 2' mit Identifikation 20 des Kunden 1 über den ID-Code 14 und Abfrage 21 der vom ID-Code hinterlegten Rabatte 22 bei der Datenbank. Der Kunde 1 bewegt sich schlussendlich wieder zu seinem Parkplatz 2' zurück. Der Parkraumbewirtschafter 2 kann diesen Bezahlvorgang nun automatisch ablaufen lassen. Es kann der ID-Code gelesen werden und es kann über den Zentralrechner 6 von der Datenbank 7 über den ID-Code der Rabatt 21 abgefragt werden. Die Rabattantwort 22 dient dann der Tarifberechnung 23 und der anschließenden Bezahlung.

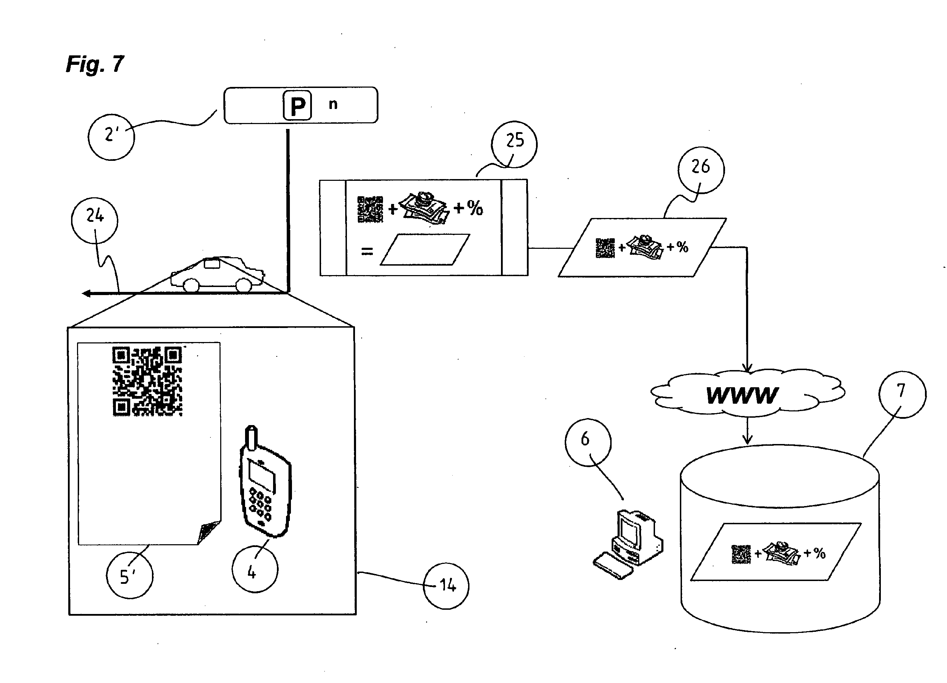

Fig. 7 zeigt die Ausfahrt 24 des Kunden aus dem Parkhaus 2' mithilfe des ID-Codes 14. Abschluss der Transaktion auf Systemseite dadurch, dass die Transaktion 25 samt des in Anspruch genommenen Rabatts in die Datenbank des Zentralrechners eingestellt wird 26. Um beim Verlassen der Parkfläche 2' beispielsweise an der Ausfahrt 24 eines Parkhauses den Bezahlvorgang abzuschließen, zeigt der Kunde entweder mit dem mobilen Endgerät 4 oder dem Druckträger 5' seinen ID-Code 14. Unter Verwendung der Transaktionsdaten 25 erfolgt dann die Transaktion 26 über die Datenbank 7 der Zentralrechneranlage 6.

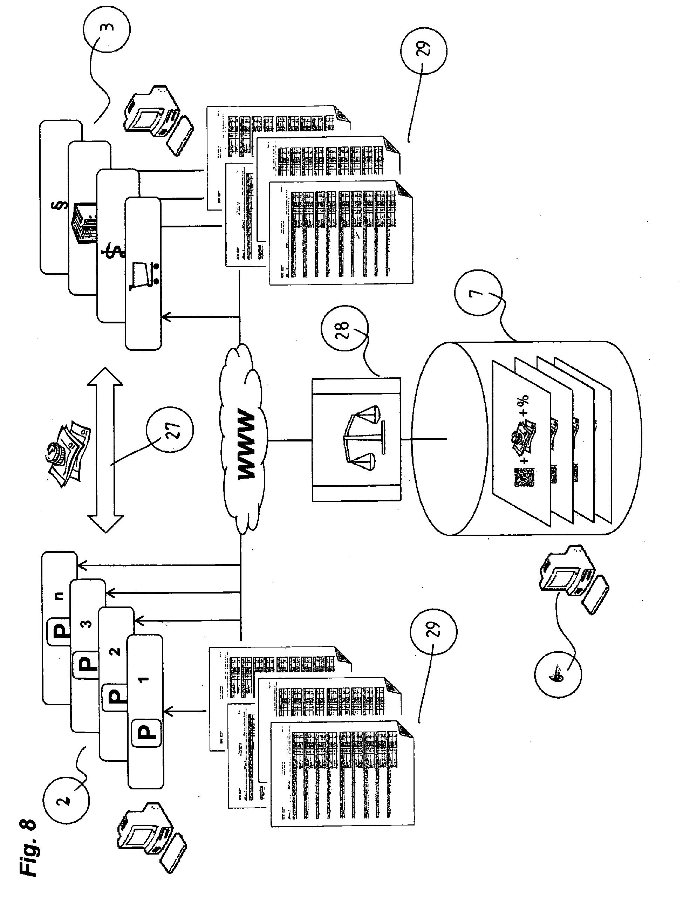

Fig. 8 zeigt, wie zu einem späteren Zeitpunkt das System über das Abrechnungsmodul 28 des Zentralrechners 6 den beteiligten Parkraumbewirtschaftern 2 und Einrichtungen 3 Abrechnungen 29 über gewährte Rabatte zur Verfügung stellt. Verrechnen 27 der Rabatte erfolgt auf Grundlage der Abrechnungen 29.

Zur Inanspruchnahme des Rabatts identifiziert 17 sich der Kunde 1 bei der Rabatt gewährenden Einrichtung 3' mittels der ID 14. Die Einrichtung 3' verfügt über einen geeigneten Leser zum Auslesen der ID 14 und über eine Netzwerkverbindung zum zur Erfindung gehörigen Zentralrechner (z.B. SSL-verschlüsselte Internetverbindung), mittels derer die Einrichtung 3' die Erfüllung 18 der Rabattbedingungen zu der gelesene ID 14 bestätigen kann. In die Datenbank 7 wird damit eingetragen, dass zu dieser ID 14 ein Rabatt in bestimmter Höhe auf den aktuellen Parkvorgang gewährt wird 19 und mit welcher Einrichtung 3' der Parkraumbewirtschafter 2' diesen Rabatt später automatisch und vollständig in Abrechnungen 29 dokumentiert verrechnen 27 kann.

Beim Beenden des Parkvorgangs identifiziert sich 20 der Kunde 1 mit der ID 14, um den Parkvorgang zu bezahlen, dann kann er durch Auslesen der ID 14 an der Ausfahrtschranke den Parkbereich verlassen 24. Registrierte Kunden (s.u.) können die ID 14 ohne vorherige Bezahlung an der Ausfahrtschranke lesen lassen 24 und den Parkbereich verlassen; der Parkvorgang für registrierte Kunden wird dann im Hintergrund mit dem Konto des registrierten Kunden verrechnet.

Unabhängig von der Bezahlart prüft 21, 22 die Erfindung, ob zu der bei der Zahlung herangezogenen ID 14 eine Rabattberechtigung vorliegt und bringt den Rabatt entsprechend zum Abzug 23. Die kompletten Transaktionsdaten einschließlich des gewährten Rabatts werden aufgezeichnet 25 und der Datenbank 7 zur Verfügung gestellt 26. Die Transaktionsdaten enthalten dabei hinreichende Details zur späteren Verrechnung 27 des Rabatts zwischen der Einrichtung 3' und dem Parkraumbewirtschafter 2', wie zum Beispiel Datum, Uhrzeit, Gesamtpreis, Rabatt, Identifikation der Rabatt gewährenden Einrichtung 2', etc.

Das Abrechnungssystem dient schlussendlich dazu, den Geldtransfer durch einen Abrechnungsprozess 28 durchzuführen, so dass sich Verrechnungen 27 zwischen Parkraumbewirtschaftern 2, Einrichtungen mit Publikumsverkehr 3 ergeben. Die Zentralanlage 6 hat aufgrund der Abrechnungsvorgänge die Transaktionen in der Datenbank 7. Daraus ergibt sich ein Guthaben 8 für die Parkraumbewirtschafter 2. Dieses kann um die von den Einrichtungen mit Publikumsverkehr 3 gewährten Rabatte ergänzt werden, so dass sich ein Ausgleich 27 ergibt.

Das beschriebene Ausführungsbeispiel dient nur der Erläuterung und ist nicht beschränkend.

### Bezugszeichenliste

- 1: Kunden
- 2: Parkraumbewirtschafter
- 2': Parkhaus
- 3: Einrichtungen mit Publikumsverkehr
- 3': Geschäft
- 4: mobiles Endgerät
- 5: stationäres Endgerät
- 5': ausgedruckter Berechtigungsidentifikationscode (kurz ID-Code)
- 6: Zentralrechner
- 7: Datenbank
- 8: durch Parkraumbewirtschafter eingegebene Daten
- 9: durch Einrichtung eingegebene Daten
- 10: Internet/Datenverbindung
- 11: Anfrage
- 12: Antwort
- 13: Auswahl
- 14: Berechtigungs-ID-Code
- 15: gesendete Reservierung mit zugehörigem ID-Code
- 16: Einfahrtvorgang in das ausgewählte Parkhaus
- 17: Identifikation des Kunden
- 18: Überprüfung der Rabattbedingung
- 19: Rabatt-Datensatz für ID-Code
- 20: Identifikation des Kunden
- 21: Systemanfrage Rabatt
- 22: Datenbankantwort Rabatt
- 23: Tarifberechnung
- 24: Ausfahrt
- 25: Aufzeichnung Transaktionsdaten
- 26: gesendeter Transaktionsdatensatz
- 27: Rabattverrechnung
- 28: Abrechnungsmodul Zentralrechner
- 29: Abrechnungsunterlagen

## Patentansprüche

1. Verfahren zur automatisierten Vermittlung von Parkflächen, wobei
a) zur Nutzung bereitgestellte Parkfläcehn von einem Zentralrechner in einer Datenbank unter Angabe von zumindest Ort, Verfügbarkeit und Nutzungsbedingungen erfasst und zum Zwecke der automatischen Verwaltung und zur Abfrage über ein rechnerbasiertes Netzwerk bereitgestellt werden,
b) einem eine Suchanfrage startenden Kunden in Frage kommende Parkflächen zur Auswahl samt Nutzungsbedingungen vorgeschlagen werden und
c) dem Kunden bei Buchung einer Parkfläche ein automatisch erstellter Berechtigungsidentifikationscode elektronisch übermittelt wird.

2. Verfahren nach Anspruch 1, **dadurch gekennzeichnet, dass** bei der Suchanfrage Zielort und geplanter Nutzungszeitraum angegeben und vom Zentralrechner Parkflächen ermittelt und mit Ort, Verfügbarkeit und Nutzungsbedingungen übermittelt werden.

3. Verfahren nach einem der vorhergehenden Ansprüche, **dadurch gekennzeichnet, dass** in Abhängigkeit von dem Berechtigungsidentifikationscode ein physisches Identmedium erzeugt wird.

4. Verfahren nach einem der vorhergehenden Ansprüche, **dadurch gekennzeichnet, dass** als Bestandteil der Nutzungsbedingungen Rabattbedingungen erfasst und verwaltet werden.

5. Verfahren nach einem der vorhergehenden Ansprüche, **dadurch gekennzeichnet, dass** dem Kunden eine Buchungsauswahl mit unterschiedlichen Parametern wie Entfernung und/oder Kosten übermittelt wird.

6. Verfahren nach einem der vorhergehenden Ansprüche, **dadurch gekennzeichnet, dass** als rechnerbasiertes Netzwerk ein Mobilfunk-Netzwerk verwendet wird.

7. Verfahren nach einem der vorhergehenden Ansprüche, **dadurch gekennzeichnet, dass** vom Kunden ein Mobilfunk-Endgerät für die Parkflächensuche und -buchung verwendet wird.

## Geänderte Patentansprüche

### Geänderte Patentansprüche gemäss Regel 137(2) EPÜ.

**1.** Verfahren zur automatisierten Vermittlung von Parkflächen, wobei a) zur Nutzung bereitgestellte Parkflächen unterschiedlicher Parkraumbewirtschafter, an unterschiedlichen Orten von einem Zentralrechner in einer Datenbank unter Angabe von zumindest Ort, Verfügbarkeit und Nutzungsbedingungen erfasst und zum Zwecke der automatischen Verwaltung und zur Abfrage über ein rechnerbasiertes Netzwerk bereitgestellt werden, b) einem eine Suchanfrage startenden Kunden in Frage kommende Parkflächen zur Auswahl samt Nutzungsbedingungen vorgeschlagen werden, wobei bei der Suchanfrage der Zielort angegeben wird, und c) dem Kunden bei Buchung einer Parkfläche ein automatisch erstellter Berechtigungsidentifikationscode elektronisch übermittelt wird.

**2.** Verfahren nach Anspruch 1, **dadurch gekennzeichnet, dass** bei der Suchanfrage Zielort und geplanter Nutzungszeitraum angegeben und vom Zentralrechner Parkflächen ermittelt und mit Ort, Verfügbarkeit und Nutzungsbedingungen übermittelt werden.

**3.** Verfahren nach einem der vorhergehenden Ansprüche, **dadurch gekennzeichnet, dass** in Abhängigkeit von dem Berechtigungsidentifikationscode ein physisches Identmedium erzeugt wird.

**4.** Verfahren nach einem der vorhergehenden Ansprüche, **dadurch gekennzeichnet, dass** als Bestandteil der Nutzungsbedingungen Rabattbedingungen einer mit dem Parkraumbewirtschafter verknüpften Einrichtung erfasst und verwaltet werden.

**5.** Verfahren nach einem der vorhergehenden Ansprüche, **dadurch gekennzeichnet, dass** dem Kunden eine Buchungsauswahl mit unterschiedlichen Parametern wie Entfernung und/oder Kosten übermittelt wird.

**6.** Verfahren nach einem der vorhergehenden Ansprüche, **dadurch gekennzeichnet, dass** als rechnerbasiertes Netzwerk ein Mobilfunk-Netzwerk verwendet wird.

**7.** Verfahren nach einem der vorhergehenden Ansprüche, **dadurch gekennzeichnet, dass** vom Kunden ein Mobilfunk-Endgerät für die Parkflächensuche und -buchung verwendet wird.
